# EUROPEAN PATENT SPECIFICATION

(11) **EP 0 667 739 B1**
(45) Date of publication and mention of the grant of the patent: **22.01.1997**
(21) Application number: 93920685.0
(22) Date of filing: 23.09.1993
(51) Int. Cl.: A01K 5/02

(54) **METHOD AND SYSTEM FOR DISTRIBUTION OF FEEDSTUFF**
VERFAHREN UND ANLAGE ZUR VERTEILUNG VON FUTTERMITTEL
PROCEDE ET SYSTEME DE DISTRIBUTION D'ALIMENTS

(30) Priority: 23.09.1992 DK 1181/92
(43) Date of publication of application: 23.08.1995
(73) Proprietor: DALTEC A/S, DK-6040 Egtved (DK)
(72) Inventor: DALL, Michael, Hellesoee, DK-9220 Aalborg East (DK)
(74) Representative: Gregersen, Niels Henrik Aarhus Patentkontor
(86) International application number: DK9300304
(87) International publication number: WO9406279

(56) References cited:
- EP-A- 0 270 150
- GB-A- 2 190 767
- US-A- 4 517 923
- US-A- 4 532 892

## Description

The present invention relates to a system for distribution of feedstuff comprising a feedstuff central store and of the type described in the introductory part of claim 1.

Mechanical distribution of feedstuff, that is supplying feedstuff from a feedstuff central store to individual feeding positions, are preferably carried out in piggeries by means of scraper conveyors, where an endless chain or wire with disc-shaped scraping elements in a tube system are passing the feedstuff central store and the individual feeding positions, respectively.

In feeding systems of this type the individual feeding positions may be represented by feeding boxes or feeding apparatuses, which by means of the scraper conveyor are supplied with a mainly dry feedstuff mixture, as the proper feeding is controlled at the individual feeding positions by means of different dosing devices. Or the individual feeding positions may consist of simple feeding troughs.

EP-A1-0 270 150 discloses a feeding pan or trough for application to the tube of feedstuff dispensing system employing tube-enclosed conveyor elements where the feedstuff is dispensed into the underlying feeding pan or trough through a relative opening in the said tube which is controlled by a gate valve, wherein a seat for the said gate valve is formed in the body of the feeding pan or trough and wherein, externally to the said seat, means for coupling to the said tube are provided.

GB-A-2 190 767 discloses a particulate feed metering apparatus for supplying feed to milking cows, which apparatus includes a computer programmed with knowledge of the feed requirements of individual animals to be fed, an interface interconnecting the computer with a feed dispenser. Each feed dispenser has an actuator operating a feed metering unit. The units may have pivoting baffle plate to provide metered delivery of food.

The invention has for its purpose to provide an improved system for distribution of feedstuff, and which by simple provisions makes it possible to optimize the feeding and individual growth, that is to obtain the best possible exploitation of the feedstuff dependent on the feedstuff need of individual animals or groups of animals.

The system according to the invention is distinctive in that each of said valve means is adapted to be controlled by a central control system and comprises a tubular valve member pivotally arranged between stubs of connecting tube section ends of said scraper conveyor, each valve member further comprises a longitudinal opening in one side and an exterior toothed rim, which via a toothed wheel is drive-connected to a gear-motor in order to respectively open and close said valve by rotation of said valve member in alternate directions. By simple constructive provisions the best possible exploitation of the feedstuff dependent on optimized growth and feedstuff need of individual animals or groups of animals is obtained.

In a preferred embodiment the system according to the invention is such provided, that said electric gear-motor comprising an electronic control unit, which is supplied with for instance 24 V AC-voltage for the operation of the gear-motor and AC-steering signals in the frequency area 10 kHz to 1 MHz from the central steering system via a network consisting of two common conductors.

Furthermore the system according to the invention may be such provided that the tubular valve member opposite the toothed rim is provided with exterior stop means cooperating with permanent stop means in the housing part in such a manner that the valve member only is allowed to rotate about a half turn - namely alternately from open to closed position or vice versa - controlled by the central steering system via said network, which consists of two common conductors.

The invention furthermore relates to a method for distribution of feedstuff using the system according to claim 1, in which feedstuff is supplied fram a feedstuff central store to individual feeding positions, for instance feeding boxes, feeding apparatuses or feeding troughs by means of the scraper conveyor, which method is distinctive in that the supply of feedstuff from the feedstuff central store is carried out by quantitative measuring of individual composed portions determined by a central control system, the individual portions are supplied in a selected order and interval to chosen individual feeding positions, and that each valve means is operated by an electric gear-motor, comprising an electronic control unit connected to said central control system by means of a common two cored network, through which electric power as well as on/off steering signals are provided to each electric gear-motor.

In a particular simple manner the method according to the invention may be such performed, that said electronic control unit via said network is supplied with normal AC-voltage for the operation of the gear-motors while AC-steering signals in the frequency area 10 kHz - 1 MHz are supplied between the central control system and the electronic control unit of the individual feeding positions via said network.

Or the method according to the invention may be such performed, that the valve means in the individual feeding positions are manually controlled by means of one or more steering wires stretching past all or groups of feeding positions, and which are controlled by means af manual handles.

The invention is explained in more detail in the following with reference to the drawing, in which:-
- Fig. 1: shows a view - partly in section - of an embodiment of a housing part for a feeding position, namely a top part with valve flap of for instance a feeding box or feeding stub,
- Fig. 2: shows the housing part shown in Fig. 1- set from below,
- Fig. 3: shows a similar view - for illustration of an example of the turning positions of a pivot arm for operating of a valve flap in a feeding position,
- Fig. 4: shows another similar view - for illustration of an example of the turning positions of a pivot arm for operating of a valve flap in a feeding position,
- Fig. 5: shows an embodiment for display and keyboard of a central control system with examples of connections,
- Fig. 6: shows examples of connections at local control system, that is electronic control for gear-motor in feeding position, while
- Fig. 7: shows a side view - partly in sections - of a preferred embodiment for a valve arrangement of the system according to the invention.

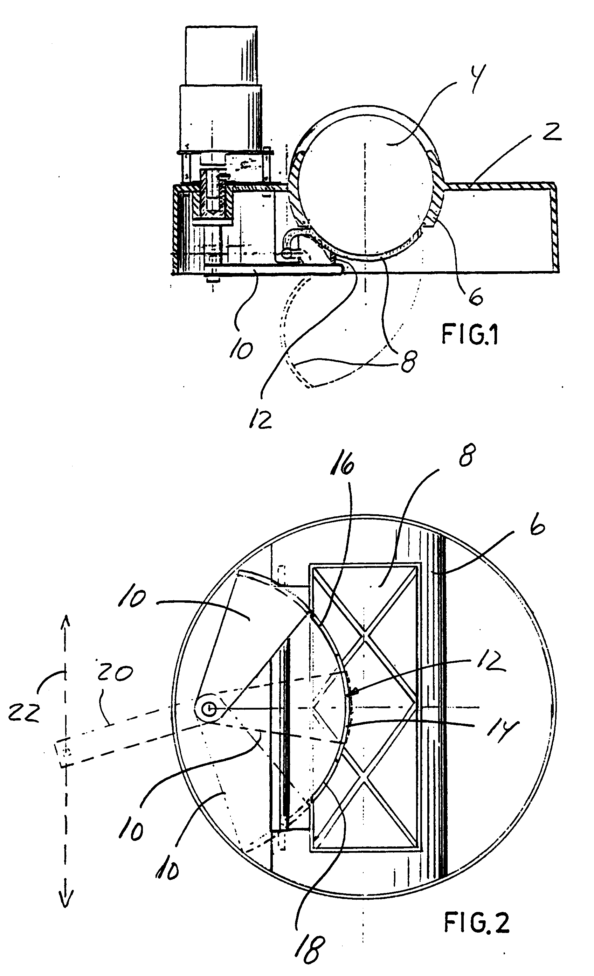

The housing part 2 shown in Fig. 1 represents a feeding position, namely a top part of feeding box or feeding trough, which on level with a tube 4 of a connected scraper conveyor in an underside 6 is provided with a valve flap 8 shown in its closed position and punctured in its open position. The valve flap 8 is operated by a pivot arm 10 by means of an electric gear-motor (12 V DC-voltage), as the pivot arm 10 engages an arched steering rail 12 (Fig. 2) at the underside of the valve flap 8. The steering rail 12 has three sections, namely a straight middle part 14 stretching parallel with the topside of the valve flap, and two outer parts 16 and 18 stretching inclined upwards and outwards from the middle part 14, so that the valve flap 8 will be closed, when the middle part 14 of the arched steering rail 12 engages the pivot arm 10, having form as an angle sector, that is that it is broadest at the outmost end, while the valve flap 8 is opening, when the inclined outer parts 16 and 18 during swinging of the pivot arm are displaced along the arched outer end of the pivot arm.

In Fig. 2 a pivot arm 10 is shown in three positions, namely two outer positions corresponding to open valve flap 8 and a middle position corresponding to closed valve flap 8. Furthermore it is shown, that the pivot arm 10 may be operated by a further swing arm 20 by means of a steering wire 22 being connected with a not shown steering handle, that is for simultanous manual control of a number of valve flaps.

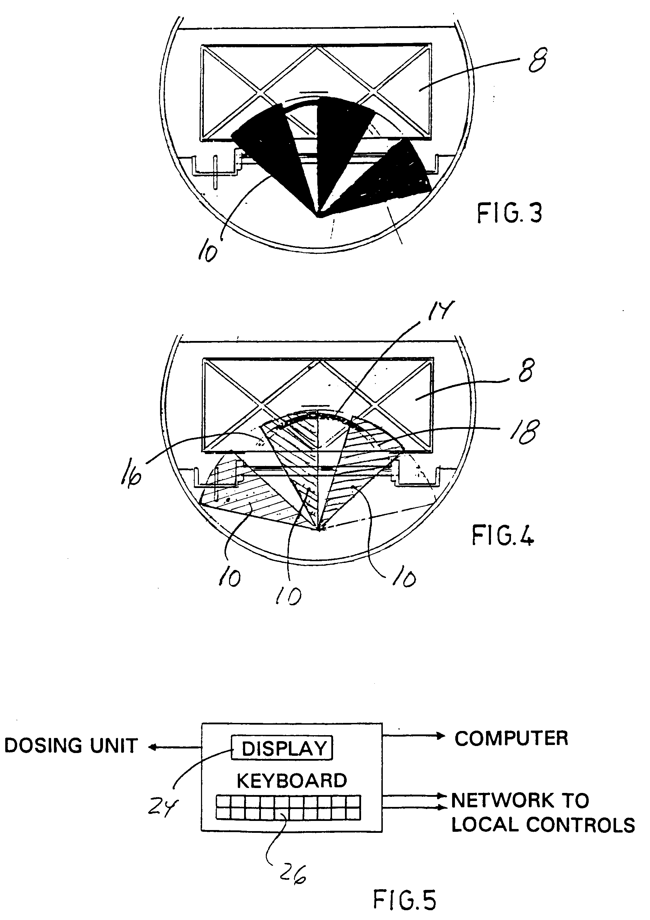

In Figs. 3 and 4 is illustrated, how two groups of valve flaps may be operated by a common steering wire and steering handle, as the pivot arms 10 in the respective groups are turned in an angle of about 30° in relation to each other, so that all valve flaps 8 (that is in both groups) are closed, when the common steering handle is placed in the middle position, where the pivot arm 10 in both groups are sliding against the middle part 14 of the arched steering rail 12, while the valve flaps 8 of the respective groups may be open, when the steering handle is placed in its respective outer positions, where the pivot arm 10 is swung free from the respective ends of the steering rail.

In this simple manner it is possible through two operations to distribute specific portions of different feedstuff mixtures to two groups of the feeding positions by means of a single scraper conveyor.

However, the main aspect of the invention is more extensive, as the system according to the invention comprises a central control system with a programming unit, which cf. Fig. 5 for instance comprises a display 24 and a keyboard 26 by mans of which individual composed feedstuff mixtures for individual feeding positions may be entered, whereafter the dosing unit of the feeding central in an optimum succession supplies the measured portions to the scraper conveyor with mutual distance between the portions.

The central control system may as indicated in Fig. 5 be ready for attachment to PC (Personal Computer), so that it is possible to follow the feeding operation on a graphic plan of the stable, as each feeding position is shown and provided with satellite (local) control, which via a network instantly informs about status (valve flap open or closed, feedstuff flow, feedstuff emptying) to the central control system respectively attached PC.

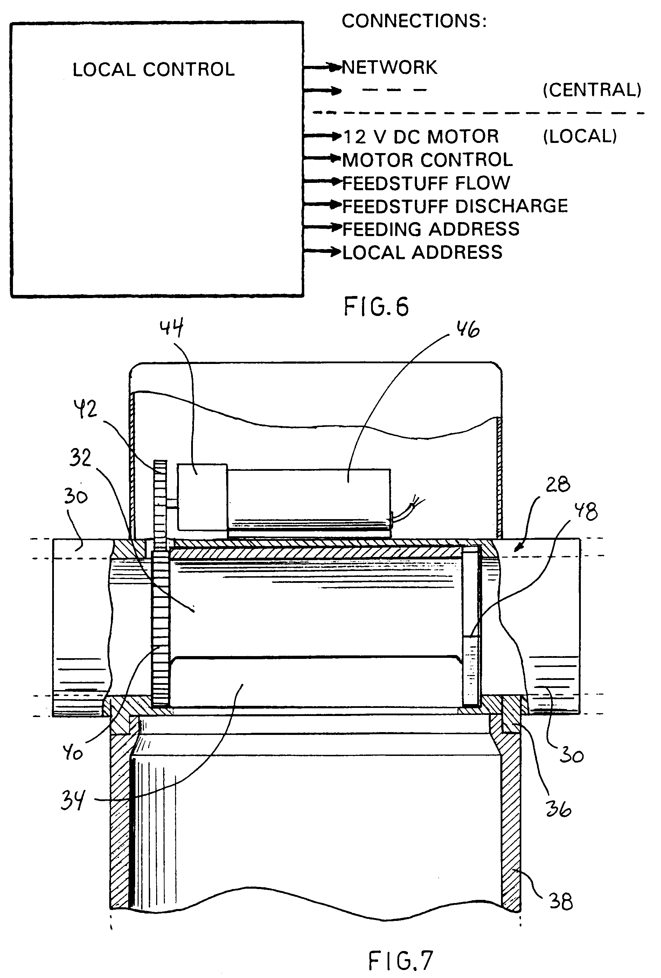

The satellite (local) controls may as mentioned in Fig. 6 be connected to an external two-cored network, vhich via local electronic control supplies the gear-motor with 12 V DC-voltage, as the network is supplied by 24 V AC-voltage (50 Hz) and AC-steering signals in the frequency area 10 kHz - 1 MHz from the central control system via a network consisting of two common conductors. The superior control system is furthermore such provided, that it automatically adopt the most optimum signal frequency area, that is the frequency area, which is less sensitive for signal noise.

Each feeding position has its individual digital address, which of course is used both at pre-programming of the feedstuff portions and at the reporting back to the common digital basis address, that is the central control system.

The central control system may furthermore be provided for instant controlling of the situation of use of the connected apparatuses, for instance the scraper conveyor, as it is important, that a preferably certain transport speed of the transport wire is maintained; but in case of variations of importance thereof dependent parametres are corrigated instantly, as the specific transport time between the feeding central and the individual feeding positions in the end is an important control parametre.

It is totally without problems to connect new feeding positions, which by means of special connecting clips at any place may be connected to the two-cored common network, whereafter the digital address of the new feeding position just is entered into the central control system.

By distribution of feedstuff, that is supplying of individual measured portions of feedstuff mixture, the portions are transported with mutual distance in known order towards the individual feeding positions, when a certain feeding portion has been supplied through the open valve flap of its destination, the valve flap is closed, as the belonging electronic control via the common network receives steering signals for closing of the valve flap, before next feeding portion is passing. Possibly the next feeding portion is to be supplied in a later feeding position, that is that all valve flaps are kept closed until this later feeding position, etc.

The valve arrangement shown in Fig. 7 comprises a tubular housing part 28 being adapted to be inserted between tube sections of a scraper conveyor. The housing part 28 has two connecting tube stubs 30, between which a tubular valve member 32 are pivotally arranged. The valve member 32 is provided with a longitudinal valve opening 34, which is shown facing downwards, that is that the valve is open, as the connecting stubs 30 and the valve member 32, through which the disc-shaped scraper elements of the scraper conveyor are passing, are connected with a lower collar member 36, being connected with either a transparent feeding box 38 or a lead-down tube via a funnel member.

The valve member 32 is exterior provided with a toothed rim 40, which via a toothed wheel 42 and a gear 44 is drive-connected with an electric gear-motor 46. Oppposite the toothed rim 40 the valve member 32 is provided with an exterior stop edge 48, which is adapted to co-operate with a firm stop in the housing 28 in such a manner, that the valve member 32 only is permitted to rotate about half a turn - namely alternately from open to closed position or vice versa - controlled by the central control system via said network. For this purpose the gear-motor 46 is steering connected with a local circuit, which when the electric current to the gear-motor 46 is increasing, because the valve member 32 is braked by means of said stop edge, pre-adjusts the gear-motor 46 to rotate in the opposite direction, when its control circuit next time is activated via the common network.

## Claims

1. A system for distribution of feedstuff comprising a feedstuff central store, a scraper conveyor comprising tube sections containing an endless wire with disc-shaped scraping elements, which is adapted to pass between said central store and a group of individual feeding positions, with each feeding position having a valve means provided in part of said conveyor tube section, ***characterized*** in that each of said valve means is adapted to be controlled by a central control system and comprises a tubular valve member (32) pivotally arranged between stubs (30, 30) of connecting tube section ends of said scraper conveyor, each valve member further comprises a longitudinal opening (34) in one side and an exterior toothed rim (40), which via a toothed wheel (42) is drive-connected to a gear-motor (44, 46) in order to respectively open and close said valve by rotation of said valve member (36) in alternate directions.

2. A system according to claim 1, ***characterized*** in that said electric gear-motor comprising an electronic control unit, which is supplied with for instance 24 V AC-voltage for the operation of the gear-motor and AC-steering signals in the frequency area 10 kHz to 1 MHz from the central steering system via a network consisting of two common conductors.

3. A system according to claim 1, ***characterized*** in that the tubular valve member opposite the toothed rim is provided with exterior stop means co-operating with permanent stop means in the housing part in such a manner that the valve member only is allowed to rotate about a half turn - namely alternately from open to closed position or vice versa - controlled by the central steering system via said network, which consists of two common conductors.

4. A method for distribution of feedstuff using the system according to claim 1, in which feedstuff is supplied from the feedstuff central store to individual feeding positions, for instance feeding boxes, feeding apparatuses or feeding troughs by means of the scraper conveyor, ***characterized*** in that the supply of feedstuff from the feedstuff central store is carried out by quantitative measuring of individual composed portions determined by a central control sustem, the individual portions are supplied in a selected order and interval to chosen individual feeding positions, and that each valve means is operated by an electric gear-motor, comprising an electronic control unit connected to said central control system by means of a common two cored network, through which electric power as well as on/off steering signals are provided to each electric gear-motor.

5. A method according to claims 4, ***characterized*** in that said electronic control unit via said network is supplied with normal AC-voltage for the operation of the gear-motors while AC-steering signals in the frequency area 10 kHz - 1 MHz are supplied between the central control system and the electronic control unit of the individual feeding positions via said network.

6. A method according to claim 4, ***characterized*** in that the valve means in the individual feeding positions are manually controlled by means of one or more steering wires stretching past all or groups of feeding positions, and which are controlled by means af manual handles.

## Patentansprüche

1. System zur Verteilung von Futtermittel mit einem zentralen Futtermittelspeicher, einem Kratzförderer mit Rohrabschnitten, die ein Endlosseil mit scheibenförmigen Kratzelementen enthalten, welches zwischen dem zentralen Speicher und einer Gruppe von einzelnen Futterstellen verläuft, wobei jede Futterstelle ein Ventil in einem Teil des Förderrohrabschnitts aufweist, dadurch gekennzeichnet, daß jedes Ventil durch ein zentrales Steuersystem steuerbar ist und ein rohrförmiges Ventilteil (32) enthält, das gelenkig zwischen Stutzen (30, 30) von verbindenden Rohrabschnittsenden des Kratzförderers angeordnet ist, daß jedes Ventil außerdem eine längliche Öffnung (34) an einer Seite und einen äußeren gezahnten Rand (40) aufweist, über den ein Zahnrad (42) antriebsmäßig mit einem Getriebemotor (44, 46) verbunden ist, um das Ventil durch Drehung des Ventilteils (36) in alternativen Richtungen jeweils zu öffnen oder zu schließen.

2. System nach Anspruch 1, dadurch gekennzeichnet, daß der elektrische Getriebemotor eine elektronische Steuereinheit aufweist, die z. B. mit 24 V-Wechselstrom zum Betrieb des Getriebemotors und Wechselstromsteuersignalen im Frequenzbereich 10 KHz bis 1 MHz von dem zentralen Steuersystem über ein aus zwei gemeinsamen Leitern bestehendes Netzwerk gesteuert wird.

3. System nach Anspruch 1, dadurch gekennzeichnet, daß das rohrförmige Ventilteil gegenüber dem gezahnten Rand mit einem äußeren Anschlag versehen ist, der mit einem permanenten Anschlag im Gehäuseteil in der Weise zusammenwirkt, daß das Ventil nur um eine halbe Umdrehung drehen kann, nämlich alternierend von einer geöffneten in eine geschlossene Stellung oder umgekehrt, welches durch das zentrale Steuersystem über das Netzwerk, das aus zwei gemeinsamen Leitern besteht, gesteuert wird.

4. Verfahren zur Verteilung von Futtermittel unter Verwendung eines Systems nach Anspruch 1, bei dem Futtermittel von einem zentralen Futtermittelspeicher durch einen Kratzförderer zu einzelnen Futterstellen überführt wird, z. B. Futterboxen, Futtereinrichtungen oder Futtertrögen, dadurch gekennzeichnet, daß die Zufuhr von Futtermittel vom zentralen Futtermittelspeicher durch quantitatives Messen einzeln zusammengesetzter Portionen, bestimmt von einem zentralen Steuersystem, erfolgt, wobei die einzelnen Portionen in gewählter Reihenfolge und Intervallen zu ausgewählten einzelnen Fütterstellen überführt werden, und daß jedes Ventil durch einen elektrischen Getriebemotor betrieben wird, der eine elektronische Steuereinheit aufweist, die mit dem zentralen Steuersystem durch ein gemeinsames Zweikernnetzwerk gesteuert wird, über welches sowohl elektrische Energie als auch Ein/Aus-Steuersignale zu jedem elektrischen Getriebemotor übertragen werden.

5. Verfahren nach Anspruch 4, dadurch gekennzeichnet, daß die elektronische Steuereinheit über das Netzwerk mit üblicher Wechselspannung zum Betrieb des Getriebemotors versorgt wird, während Wechselstromsteuersignale im Frequenzbereich 10 KHz bis 1 MHz zwischen dem zentralen Steuersystem und der elektronischen Steuereinheit der einzelnen Futterstelle über das Netzwerk übertragen werden.

6. Verfahren nach Anspruch 4, dadurch gekennzeichnet, daß die Ventile an den einzelnen Futterstellen manuell durch ein oder mehrere Steuerdrähte steuerbar ist, die sich über alle oder Gruppen von Futterstellen erstrecken und durch manuelle Handhabungen betätigbar sind.

## Revendications

1. Système de distribution d'un produit alimentaire comportant un magasin central de produit alimentaire, un transporteur à raclettes comportant des tronçons de tubes contenant un câble sans fin muni d'éléments de raclage en forme de disque, qui est conçu pour circuler entre ledit magasin central et un groupe de positions individuelles d'alimentation, chaque position d'alimentation ayant un moyen à vanne situé dans une partie dudit tronçon de tube du transporteur, caractérisé en ce que chacun desdits moyens à vanne est destiné à être commandé par un système central de commande et comporte un élément de vanne tubulaire (32) agencé de façon pivotante entre des embouts (30, 30) d'extrémités de tronçons de tubes de raccordement dudit transporteur à raclettes, chaque élément de vanne présentant en outre une ouverture longitudinale (34) dans un côté et un rebord denté extérieur (40) qui, par l'intermédiaire d'une roue dentée (42), est en prise d'entraînement avec un moto-réducteur (44, 46) pour respectivement ouvrir et fermer ladite vanne par une rotation dudit élément de vanne (36) dans des sens alternés.

2. Système selon la revendication 1, caractérisé en ce que ledit moto-réducteur électrique comporte une unité de commande électronique, qui est alimentée, par exemple, par une tension alternative de 24 volts pour faire fonctionner le moto-réducteur, et par des signaux alternatifs de direction dans la gamme de fréquences de 10 kHz à 1 MHz à partir du système central de direction, par l'intermédiaire d'un réseau constitué de deux conducteurs communs.

3. Système selon la revendication 1, caractérisé en ce que l'élément de vanne tubulaire opposé au rebord denté est pourvu de moyens d'arrêt extérieurs coopérant avec des moyens d'arrêt permanents situés dans la partie de corps d'une manière telle que l'élément de vanne ne puisse tourner que d'environ un demi-tour - à savoir alternativement d'une position ouverte à une position fermée ou vice versa - sous la commande du système central de direction par l'intermédiaire dudit réseau, qui est constitué de deux conducteurs communs.

4. Procédé de distribution d'un produit alimentaire en utilisant le système selon la revendication 1, dans lequel le produit alimentaire est amené depuis le magasin central de produit alimentaire jusqu'à des positions individuelles d'alimentation, par exemple des boîtes d'alimentation, des appareils d'alimentation ou des auges d'alimentation, au moyen du transporteur à raclettes, caractérisé en ce que l'amenée du produit alimentaire depuis le magasin central de produit alimentaire est réalisée par une mesure quantitative de portions composées individuelles déterminées par un système central de commande, les portions individuelles sont amenées en ordre et à intervalles choisis à des positions d'alimentation individuelles choisies, et en ce que chaque moyen à vanne est actionné par un moto-réducteur électrique, comportant une unité électronique de commande connectée audit système central de commande au moyen d'un réseau commun à deux âmes, par l'intermédiaire duquel de l'énergie électrique ainsi que des signaux de direction activés/désactivés sont appliqués à chaque moto-réducteur électrique.

5. Procédé selon la revendication 4, caractérisé en ce que ladite unité électronique de commande, par l'intermédiaire dudit réseau, est alimentée en une tension alternative normale pour le fonctionnement des moto-réducteurs, tandis que des signaux alternatifs de direction, dans la gamme de fréquences de 10 kHz - 1 MHz, sont appliqués entre le système de commande central et l'unité de commande électronique des positions individuelles d'alimentation par l'intermédiaire dudit réseau.

6. Procédé selon la revendication 4, caractérisé en ce que les moyens à vanne dans les positions individuelles d'alimentation sont commandés manuellement à l'aide d'un ou plusieurs câbles de direction s'étendant au-delà de la totalité ou de groupes des positions d'alimentation, et qui sont commandés à l'aide de leviers manuels.
